# EUROPEAN PATENT SPECIFICATION

(11) **EP 3 544 085 B1**
(45) Date of publication and mention of the grant of the patent: **05.08.2020**
(21) Application number: 18799659.0
(22) Date of filing: 29.09.2018
(51) Int. Cl.: H01M 2/20, H01M 2/34, H01M 10/052

(54) **BATTERY CONNECTING DEVICE AND BATTERY PACK HAVING SAME**
ZELLENVERBINDUNGSVORRICHTUNG UND BATTERIE MIT DER ZELLE
DISPOSITIF DE CONNEXION DE BATTERIE ET BLOC-BATTERIE COMPORTANT CELUI-CI

(30) Priority: 30.01.2018 CN 201810086959
(43) Date of publication of application: 25.09.2019
(73) Proprietor: Jiangsu Autoparts New Energy Technology Co., Ltd., Changzhou, Jiangsu Province 213033 (CN)
(72) Inventor: Wang, Guocheng, Changzhou Jiangsu 213000 (CN)
(74) Representative: Wang, Bo
(86) International application number: PCT/CN2018/108767
(87) International publication number: WO 2019/148873

(56) References cited:
- EP-A1- 2 631 969
- EP-A1- 3 121 870
- EP-A2- 2 741 391
- CN-A- 103 782 468
- CN-A- 108 134 037
- JP-A- 2013 258 115
- US-A1- 2012 058 382

## Description

### TECHNICAL FIELD

The present disclosure relates to battery technology field, specifically relates to cell connection devices and batteries comprising the cell connection device.

### BACKGROUND

With the development of modern society and the increase of people's environment protection awareness, more and more electronic devices use rechargeable secondary batteries as their power sources, e.g., cell phones, personal computers, electric tools, and electric vehicles. With the widespread use of secondary batteries, there are increasing requirements on safety and cycle life of secondary batteries.

When a secondary cell, such as a lithium ion cell, is overcharged, an excess of heat or gas generates inside the cell because of thermal runaway of electrode materials and/or decomposition of electrolytes. The sudden increase of pressure inside the cell may cause the cell get on fire or lead to an explosion. Currently, to ensure the safety of secondary battery, people of the industry have designed some current-cutting devices disposed inside the cell to prevent fire or explosion caused by overcharging. However, these built-in current-cutting devices have some problems: at first, the built-in device occupies some internal space of the cell, so that the weight percentage of the effective active material in the cell decreases, and the battery energy density decreases; secondly, the startup of the built-in current-cutting device can be realized only when some changes or adjustments of the anode and cathode materials and/or electrolyte are made, which may cause the cell could not present its best performance; thirdly, the built-in current-cutting device has high cost because of its complicated design which needs to consider the compatibility with the entire cell structure, and lacking of universality, i.e., the built-in current-cutting devices for batteries having different cells need to be developed respectively.

Based on the above problems, it is needed to develop a novel current-cutting device which can cut the current of a battery timely when the battery is overcharged, so as to prevent the battery get on fire or explode. Document US2012-058382 disclose a cell connection device which includes an interrupter having disconnect capabilities.

### SUMMARY OF THE INVENTION

Based on the above problems, the present disclosure provides a cell connection device and a battery comprising the cell connection device, so as to solve the safety issue caused by overcharging.

The present invention is defined by the features of claim 1, and relates to a cell connection device. In particular, the present disclosure provides a cell connection device for electrically connecting a first cell and a second cell in serial connection in a battery, comprising: a housing comprising a conductive upper cover, a conductive lower cover and an electrically insulated side wall; a metal sheet electrically connecting the conductive upper cover and the conductive lower cover and separating the housing into a first space and a second space; a first connecting terminal configured to electrically connect an anode of the first cell and the conductive upper cover; a second connecting terminal configured to electrically connect a cathode of the second cell and the conductive lower cover; and at least one pressure changing unit disposed in the first space, configured to receive a sample voltage of a sample cell in the battery, and start to increase the pressure within the first space when the sample voltage is equal to or greater than a predetermined value, so as to break down the electrical connection between the metal sheet and the conductive upper cover or the conductive lower cover and cut off the current of the battery.

Furthermore, the pressure changing unit and the conductive lower cover may be integrated. For example, the pressure changing unit comprises a shell, and at least one part of the shell acts as the conductive lower cover.

Furthermore, the sample cell may be the second cell.

Furthermore, the pressure changing unit comprises at least one electrochemical unit. The electrochemical unit comprises a cathode, an anode, an electrolyte solution and a shell having at least one opening. The cathode and the anode of the electrochemical unit are electrically connected to the anode and the cathode of the sample cell respectively. The inner chamber of the electrochemical unit communicates with the first space through the opening of the shell. When the sample voltage is equal to or greater than the predetermined value disclosed herein, the electrochemical unit starts to work and produce at least one gas.

Furthermore, the shell of the electrochemical unit may have a compression strength not lower than 0.1kPa.

Furthermore, the gas produced by the electrochemical unit may be one or more chosen from carbon dioxide, methane, ethane, hydrogen, ethylene, carbon monoxide, and acetylene. The gas may be produced from one or more chosen from: the reaction of cathode material, the reaction of anode material, and the reaction of electrolyte happened during the working status of the electrochemical unit.

Furthermore, the cathode of the electrochemical unit may comprise a cathode carrier. The cathode carrier may comprise one or more chosen from aluminum, titanium, platinum, gold, stainless steel, and graphite. In some embodiments, the cathode of the electrochemical unit may further comprise a cathode active material, and the cathode active material may be coated on the cathode carrier. The cathode active material may be one or more chosen from carbon, silicon, aluminum oxide, compounds containing alkali metal or alkali earth metal, ammonium nitrate, oxalic acid, maleic acid, citric acid, urea, and maleic anhydride. The compounds containing alkali metal or alkali earth metal disclosed herein preferably are compounds containing lithium. The compound containing lithium may be one or more chosen from lithium chlorate, lithium fluoride, lithium cobalt oxide, lithium nickelate, lithium nickel cobalt manganese oxide, lithium ferrite, lithium manganese oxide, ferrous phosphate lithium, lithium vanadate, lithium vanadium phosphate, lithium vanadium phosphate fluoride, lithium oxalate, and lithium citrate.

Furthermore, the anode of the electrochemical unit may comprise an anode carrier. The anode carrier may comprise one or more chosen from copper, nickel, steel, aluminum, and graphite. In some embodiments, the anode of the electrochemical unit may further comprise an anode active material, and the anode active material may be coated on the anode carrier. The anode active material may be one or more chosen from carbon, silicon, lithium titanium oxide, and tin.

Furthermore, the electrolyte solution of the electrochemical unit may comprise at least one electrolyte and at least one non-aqueous solvent. The electrolyte disclosed herein may be one or more chosen from lithium salts, sodium salts, and potassium salts. The non-aqueous solvent disclosed herein may be one or more chosen from propylene carbonate (PC), ethylene carbonate (EC), vinylene carbonate (VC), methyl ethyl carbonate ester, 1,2-dimethoxyethane, ethoxyethane, diethyl carbonate (DEC), dimethyl carbonate (DMC), tetrahydrofuran (THF), 2-methyltetrahydrofuran, 1,3-dioxolane, 4-methyl-1,3-dioxolane, ethyl ether, sulfolane, methylsulfolane, acetonitrile, propionitrile, ethyl acetate, methyl propionate, and methyl butyrate. In some embodiments, the electrolyte solution disclosed herein further comprises at least one additive. An oxidation reaction or a reduction reaction of the additive may occur to produce gas during the working status of the electrochemical unit. As an example, the additive disclosed herein may be cyclohexylbenzene or biphenyl.

Furthermore, the electrochemical unit disclosed herein may further comprise a separator disposed between the cathode and the anode thereof.

Furthermore, the cell connection device disclosed herein may further comprise at least one arc-extinguishing unit disposed in the first space or the second space. The arc-extinguishing unit may comprise at least one arc-extinguishing material or arc-extinguishing media.

The present disclose also provides a battery comprising multiple cells in serial connection, and at least one cell connection device disclosed herein. The "multiple cells" disclosed herein comprises two or more cells in serial connection.

Furthermore, the battery disclosed herein comprises two or more cell connection devices disclosed herein. The two or more cell connection devices may be in parallel connection.

The cell connection device of the present disclosure can be applied in a battery, wherein the cell connection device has a serial connection with cells in the battery. When the battery is under an abnormal condition, for example, when the battery is overcharged, and it is shown that the sample voltage of the sample cell is equal or greater than a predetermined value, the cell connection disclosed herein can react quickly to break down its internal electric connection, so as to cut off the current of the battery and realize the protection of the battery.

The cell connection device of the present disclosure did not change the internal structure and chemical system of the cells in the battery, so redesign of cell internal structure is not needed, the decrease of battery energy density is also not needed, and the cell in the battery can present its best performance. The start-up voltage of the cell connection device disclosed herein can be adjusted to adapt the requirements of different battery systems. Therefore, the cell connection device has good compatibility and can be applied in different battery systems, such as lithium ion battery, lead-acid battery, etc. The cost of the cell connection device disclosed herein can be low.

### BRIEF DESCRIPTION OF THE DRAWINGS

Figure 1 is a cross-section diagram of cell connection device 100 according to one embodiment of the present disclosure;
Figure 2 is a schematic diagram of a battery containing cell connection device 100 according to one embodiment of the present disclosure;
Figure 3a is a cross-section diagram of electrochemical unit 171 according to one embodiment of the present disclosure;
Figure 3b is an internal schematic diagram of electrochemical unit 171 shown in Figure 3a;
Figure 4 is a cross-section diagram of cell connection device 200 according to one embodiment of the present disclosure;
Figure 5 is an external schematic diagram of cell connection device 200 shown in Figure 4;
Figure 6 is a schematic diagram of a battery containing a cell connection device 200 according to one embodiment of the present disclosure;
Figure 7 is a schematic diagram of a battery containing two cell connection devices 200 according to one embodiment of the present disclosure;
Figure 8 is a cross-section diagram of cell connection device 300 according to one embodiment of the present disclosure;
Figure 9 is an external schematic diagram of cell connection device 300 shown in Figure 8.

### DETAILED DESCRIPTION

To make the technical solution of the present disclosure more clear and definite, the disclosure is further described in combination with drawings.

The "cell" disclosed herein is single cell, which comprises rechargeable cell, such as lithium ion cell, lead acid cell, etc.

The "battery" disclosed herein is a system comprising multiple (i.e., at least two) single cells in serial or parallel connection. For example, power battery for electric vehicle.

The "sample cell" disclosed herein may be any one single cell in a battery. The pressure changing unit in the cell connection device of the present disclosure receives the voltage of the sample cell, i.e., the sample voltage. The predetermined value of the sample voltage disclosed herein is a safe threshold voltage value of the sample cell. For example, the sample voltage of a sample cell in a lithium ion battery has a predetermined value of 4.2V. When the sample voltage of the sample cell is equal to or greater than 4.2V, the lithium ion battery is in abnormal condition. In another example, the sample voltage of a sample cell in a lead-acid battery has a predetermined value of 1.8V. When the sample voltage of the sample cell is equal to or greater than 1.8V, the lead-acid battery is in abnormal condition. The abnormal condition disclosed herein may be caused by overcharging or other reasons, during which the battery is likelihood get on fire or exploded. When the abnormal condition comes up, the current of the battery need to be cut off immediately to ensure safety.

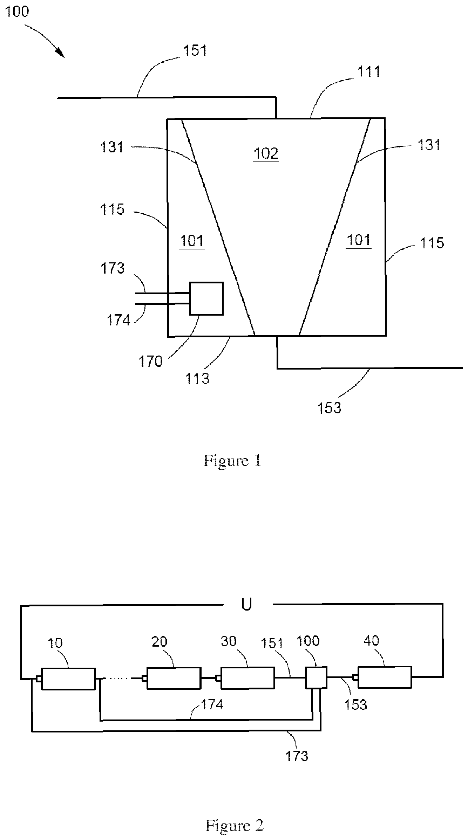

Figure 1 is a cross-section diagram of cell connection device 100 according to one embodiment of the present disclosure. As shown in Figure 1, the cell connection device 100 comprises: a housing comprising a conductive upper cover 111, a conductive lower cover 113 and an electrically insulated side wall 115; a metal sheet 131; a first connecting terminal 151; a second connecting terminal 153; and a pressure changing unit 170. The housing is a sealed housing, and it may be in a cubic shape, a cylindrical shape, or other shape including irregular shape. The first connecting terminal 151 and the second connecting terminal 153 are electrically connected to the conductive upper cover 111 and the conductive lower cover 113 respectively.

In the cell connection device 100, the metal sheet 131 locates inside the housing, configured to connect the conductive upper cover 111 and the conductive lower cover 113 and separate the housing into a first space 101 and a second space 102. Specifically, the metal sheet 131 may be an annular surface having a first opening and a second opening, wherein the circular edge of the first opening is connected to the conductive upper cover 111, the circular edge of the second opening is connected to the conductive lower cover 113, thereby separating the housing into the first space 101 and the second space 102. The first space 101 and the second space 102 are isolated physically and do not communicate with each other. The connection between the metal sheet 131 and the conductive upper cover 111, and the connection between the metal sheet 131 and the conductive lower cover 113 may be weld, bonding, or other suitable connection method.

As shown in Figure 1, the first opening of the metal sheet 131 is larger than the second opening. The second space 102 is frustum cone-like. In some other embodiments, the size of the first opening of the metal sheet 131 may be smaller or equal to the size of the second opening. In addition, in some other embodiments, the metal sheet 131 may be a conical surface. When the metal sheet 131 is a conical surface, there is a dot connection between the metal sheet 131 and the conductive upper cover 111 or the conductive lower cover 113.

The pressure changing unit 170 locates in the first space 101, and can receive voltage signal. For example, as shown in Figure 1, the pressure changing unit 170 comprises a cathode connection terminal 173 and an anode connection terminal 174, configured to connect to a cathode and an anode of a sample cell respectively and receive a sample voltage of the sample cell. The sample cell may be any one of cells in the battery.

In some embodiment, the connection terminals, e.g., the first connecting terminal 151, the second connecting terminal 153, and the cathode connection terminal 173 and the anode connection terminal 174 of the pressure changing unit 170, may be cables, or other conductive connection components.

Figure 2 is a schematic diagram of applying cell connection device 100 in a battery comprising cells 10, 20, 30, 40. As shown in Figure 2, the battery comprises multiple cells in serial connection, including but not limit to cells 10, 20, 30, 40. The cell connection device 100 is connected between cell 30 and cell 40. The cell 10 is a sample cell. The first connecting terminal 151 of cell connection device 100 is electrically connected to the anode of cell 30. The second connecting terminal 153 is electrically connected to the cathode of cell 40. The cathode connection terminal 173 and the anode connection terminal 174 of the pressure changing unit 170 are respectively electrically connected to cathode and anode of sample cell 10, so the pressure changing unit 170 receives the sample voltage of sample cell 10.

In the system shown in Figure 2, the operating principle of cell connection device 100 in the battery is: when the battery is in normal working condition, the current flows through cathode of cell 40, conductive lower cover 113, metal sheet 131, conductive upper cover 111, and anode of cell 30 in sequence, forming a loop. The cell connection device 100 is connected in the battery loop in series, functioned as electrically connection, and will not affect the charge or discharge of the battery. When the battery is in abnormal working condition, for example, overcharging, which is represented as the sample voltage of sample cell 10 is equal to or higher than a predetermined value, the pressure changing unit 170 of cell connection device 100 starts to work, so as to increase the pressure in the first space 101, causing a shape change of the metal sheet 131, thereby breaking down the electrical connection between the metal sheet 131 and the conductive upper cover 111 or the conductive lower cover 113 and cutting off the current of the battery, achieving a protection function.

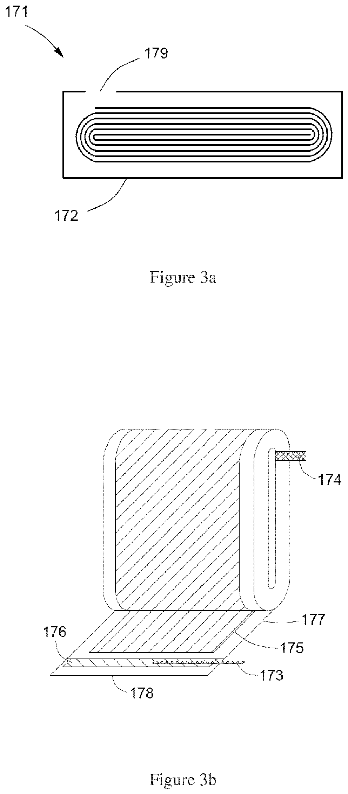

In some embodiments, the pressure changing unit 170 comprises an electrochemical unit 171 shown in Figure 3a and 3b. The electrochemical unit 171 comprises a shell 172, a cathode connection terminal 173, an anode connection terminal 174, cathode 175, anode 176, and electrolyte solution (not shown). As discussed above, the cathode connection terminal 173 and the anode connection terminal 174 are respectively electrically connected to cathode and anode of sample cell 10 in the battery. The shell 172 of the electrochemical unit 171 has at least one opening 179, making the inner chamber of the electrochemical unit 171 communicate with outside, for example, the first space 101 of the cell connection device 100. In addition, the shell 172 also has a through hole for electrolyte solution injection (not shown), through which the electrolyte solution is injected into the inner chamber of the electrochemical unit 171. The start-up voltage of the electrochemical unit 171 is equal to the predetermined value of the sample voltage of the sample cell 10 in the battery. Thus, when the sample voltage is equal to or higher than the predetermined value, the electrochemical unit 171 starts to work. During the working status of the electrochemical unit 171, at least one gas is produced and spread into the first space 101, so that the pressure in the first space 101 is increased, thereby breaking down the electrical connection between the metal sheet 131 and the conductive upper cover 11 or the conductive lower cover 113 and cutting off the current. The type of the produced gas depends on the materials of cathode 175, anode 176, and electrolyte solution used in the electrochemical unit 171. Generally, the gas produced in the electrochemical unit 171 is one or more chosen from carbon dioxide, methane, ethane, hydrogen, ethylene, carbon monoxide, and acetylene. The gas may be generated from at least one of the reaction of materials of cathode 175, the reaction of materials of anode 176, and the reaction of materials of electrolyte solution during working of the electrochemical unit 171.

The shell 172 of the electrochemical unit 171 may have a certain compression strength. In some embodiments, the shell 172 of the electrochemical unit 171 has a compression strength not lower than 0.1kPa. In one embodiment, the shell 172 has a compression strength of 800 kPa. When the electrochemical unit 171 works to produce gas, the shell 172 having a certain compression strength can limit the volume expansion of the electrochemical unit 171 in a specific range, preventing the shell 172 of the electrochemical unit 171 fractures before the breakdown of the electrical connection between the metal sheet 131 and the conductive upper cover 111 or the conductive lower cover 113.

The cathode 175 of the electrochemical unit 171 comprises a cathode carrier. The cathode carrier may comprise metal, alloy, or non-metallic material. For example, the metal or alloy may be one or more chosen from aluminum, titanium, platinum, gold, and stainless steel. The non-metallic material may be graphite. Preferably, aluminum is used as the cathode carrier. In some embodiments, the cathode 175 may further comprise a cathode active material, and the cathode active material may be coated on the cathode carrier. The cathode active material may be simple substance or compound, for example, one or more chosen from carbon, silicon, aluminum oxide, compounds containing alkali metal or alkali earth metal, ammonium nitrate, oxalic acid, maleic acid, citric acid, urea, and maleic anhydride. The compounds containing alkali metal or alkali earth metal disclosed herein preferably are compounds containing lithium. The compound containing lithium may be one or more chosen from lithium chlorate, lithium fluoride, lithium cobalt oxide, lithium nickelate, lithium nickel cobalt manganese oxide, lithium ferrite, lithium manganese oxide, ferrous phosphate lithium, lithium vanadate, lithium vanadium phosphate, lithium vanadium phosphate fluoride, lithium oxalate, and lithium citrate. Besides the compound containing lithium, other compounds containing alkali metal or alkali earth metal comprise calcium carbonate, sodium bicarbonate, sodium oxalate, and sodium acetate.

The anode 176 of the electrochemical unit 171 may comprise an anode carrier. The anode carrier may comprise metal, alloy, or non-metallic material. For example, the metal or alloy may be one or more chosen from copper, nickel, steel, aluminum; the non-metallic material may be graphite. Preferably, copper is used as the anode carrier. In some embodiments, the anode 176 may further comprise an anode active material, and the anode active material may be coated on the anode carrier. The anode active material may be one or more chosen from carbon, silicon, lithium titanium oxide, tin and other substances which can react with lithium. Preferably, carbon is used as the anode active material.

The electrolyte solution of the electrochemical unit 171 comprises at least one electrolyte, at least one non-aqueous solvent and optionally at least one additive. The additive can produce gas during the working of the electrochemical unit 171.

The electrolyte disclosed herein is one or more chosen from lithium salts, sodium salts, and potassium salts. The lithium salts may be one or more chosen from lithium hexafluorophosphate, lithium tetrafluoroborate, lithium hexafluoroarsenate, lithium perchlorate, lithium trifluoromethanesulfonate, lithium bis(trifluoromethanesulphonyl)imide, lithium aluminum tetrachloride, lithium hexafluorosilicate, lithium tetraphenylborate, lithium chloride, lithium bromide, and lithium nitrate. The sodium salts are at least one of sodium chloride and sodium sulfate. The potassium salts are at least one of potassium chloride and potassium nitrate.

The non-aqueous solvent disclosed herein is one or more chosen from propylene carbonate (PC), ethylene carbonate (EC), vinylene carbonate (VC), methyl ethyl carbonate ester, 1,2-dimethoxyethane, ethoxyethane, diethyl carbonate (DEC), dimethyl carbonate (DMC), tetrahydrofuran (THF), 2-methyltetrahydrofuran, 1,3-dioxolane, 4-methyl-1,3-dioxolane, ethyl ether, sulfolane, methylsulfolane, acetonitrile, propionitrile, ethyl acetate, methyl propionate, and methyl butyrate.

The additive disclosed herein is cyclohexylbenzene or biphenyl, which can be oxidized to produce gas during working of the electrochemical unit 171.

The start-up voltage of the electrochemical unit 171 depends on the materials of the cathode 175, the anode 176 and the electrolyte solution. Therefore, the start-up voltage of the electrochemical unit 171 can be adjusted through changing the materials combination according to the need. In some embodiments, the start-up voltage of the electrochemical unit 171 mainly depends on the components of the electrolyte solution. For example, when ethylene carbonate is used as the electrolyte solution, the start-up voltage is 5.58V; when diethyl carbonate is used as the electrolyte solution, the start-up voltage is 5.46V. In addition, with decrease of purity of electrolyte solution, the corresponding start-up voltage may decrease. Therefore, the start-up voltage of the electrochemical unit 171 can be adjusted through adjusting the components and purity of the electrolyte solution.

The cathode 175 and anode 176 of the electrochemical unit 171 may form a winding structure. When they form a winding structure, the electrochemical unit 171 may further comprise a separator disposed between the cathode 175 and the anode 176. The separator separates the cathode 175 and anode 176 in the electrochemical unit 171, for example, the upper separator 177 and the lower separator 178. As one embodiment, the separator is polyethylene microporous membrane or polypropylene microporous membrane.

When the electric connection between the metal sheet 131 and the conductive upper cover 111 or the conductive lower cover 113 is broken down, the breaking parts are in high voltage condition. In some embodiments, the cell connection device 100 further comprises at least one arc-extinguishing unit (not shown) to avoid arc discharge caused by high voltage, so as to improve the reliability of the cell connection device 100. The arc-extinguishing unit is disposed in the first space 101 or the second space 102, and comprise at least one arc-extinguishing material or arc-extinguishing media. In one embodiment, the arc-extinguishing unit comprises an arc-extinguishing media, e.g., sulfur hexafluoride, located in the first space 101 or the second space 102. In another embodiment, the arc-extinguishing unit comprises an arc-extinguishing material, e.g., ceramics, silica sand, sprayed on the inner wall of the first space 101 or the second space 102. Preferably, the arc-extinguishing unit is disposed near the connection between the metal sheet 131 and the conductive upper cover 111 or the conductive lower cover 113.

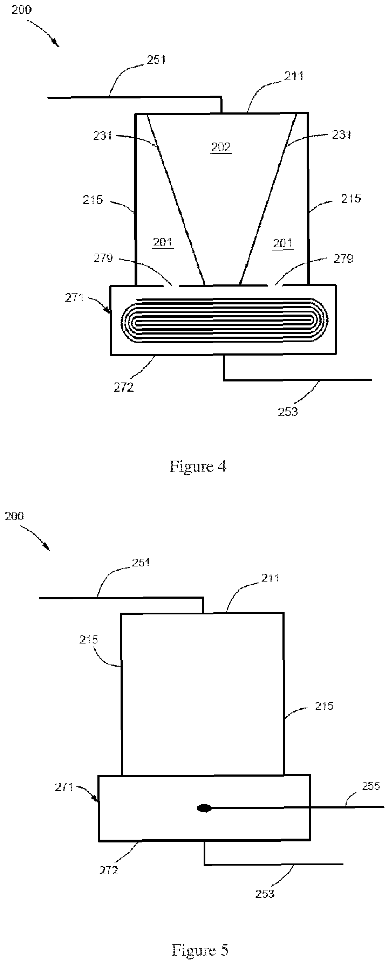

Figure 4 and Figure 5 are respectively cross-section diagram and external schematic diagram of cell connection device 200. Different from the cell connection device 100, in the cell connection device 200, the electrochemical unit 271 is integrated with the conductive lower cover. The cell connection device 200 comprises a conductive upper cover 211, an electrically insulated side wall 215, a metal sheet 231, a first connecting terminal 251; a second connecting terminal 253, a third connecting terminal 255, and an electrochemical unit 271. The conductive upper cover 211, electrically insulated side wall 215, and a part of the shell 272 of the electrochemical unit 271 constitute the housing of the cell connection device 200. The housing is a sealed housing.

The metal sheet 231 locates inside the housing of the cell connection device 200 as an annular surface having a first opening and a second opening. The circular edge of the first opening is connected to the conductive upper cover 211, and the circular edge of the second opening is connected to the conductive lower cover 213, thereby separating the housing into the first space 201 and the second space 202. The first space 201 and the second space 202 are isolated physically and do not communicate with each other.

The electrochemical unit 271 is similar to the electrochemical unit 171, comprising a shell 272, a cathode, an anode, and an electrolyte solution, wherein the shell 272 of the electrochemical unit 271 is electrically connected to the anode of the electrochemical unit 271, the shell 272 has at least one through hole 279 for communicating the inner chamber of the electrochemical unit 271 and the first space 201 of the cell connection device 200.

The first connection terminal 251 is electrically connected to the conductive upper cover 211. The second connection terminal 253 is electrically connected to the shell 272 of the electrochemical unit 271. The third connection terminal 255 is electrically connected to the cathode of the electrochemical unit 271. In one embodiment, the third connection terminal 255 is electrically connected to the cathode of the electrochemical unit 271 through a rivet.

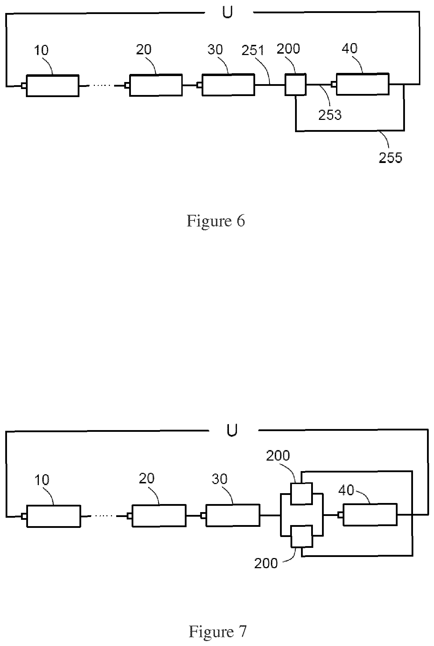

Figure 6 is a schematic diagram of applying cell connection device 200 in a battery comprising cells 10, 20, 30, 40. The battery comprises multiple cells in serial connection, including but not limit to cells 10, 20, 30, 40. The cell connection device 200 is connected between cell 30 and cell 40. The cell 40 is a sample cell. The first connecting terminal 251 of cell connection device 200 is electrically connected to the anode of cell 30. The second connecting terminal 253 is electrically connected to the cathode of cell 40. The third connecting terminal 255 is electrically connected to the anode of cell 40. Thus, the electrochemical unit 271 receives the sample voltage of sample cell 40.

As shown in Figure 6, when the battery is in normal working condition, the current flows through cathode of cell 40, the shell 272 of the electrochemical unit 271, metal sheet 231, conductive upper cover 211, and anode of cell 30 in sequence, forming a loop. The cell connection device 200 is connected in the battery loop in series, functioned as electrically connection, and will not affect the charge or discharge of the battery. When the battery is in abnormal working condition, for example, overcharging, which is represented as the sample voltage of sample cell 40 is equal to or higher than a predetermined value, reaching the start-up voltage the electrochemical unit 271, the electrochemical unit 271 starts to work, so as to increase the pressure in the first space 201, causing a shape change of the metal sheet 231, thereby breaking down the electrical connection between the metal sheet 231 and the conductive upper cover 211 or the shell 272 of the electrochemical unit 271, and cutting off the current of the battery, achieving a protection function.

To avoid cutting off current due to false triggering the cell connection device 200 during the normal working condition of the battery, two or more cell connection devices 200 connected in parallel can be employed. For example, two cell connection devices 200 are applied in the battery comprising cells 10, 20, 30, 40. The two cell connection devices 200 are in parallel connection. Each of them employs a connection way as shown in Figure 6. The cell 40 is a sample cell. Thus, only when both of the cell connection devices 200 connected in parallel are cut off internally, the current of the battery can be cut off. In some other embodiments, the battery comprises two or more than two cell connection devices of the present disclosure, which are in parallel connection, and they connect to different sample cells.

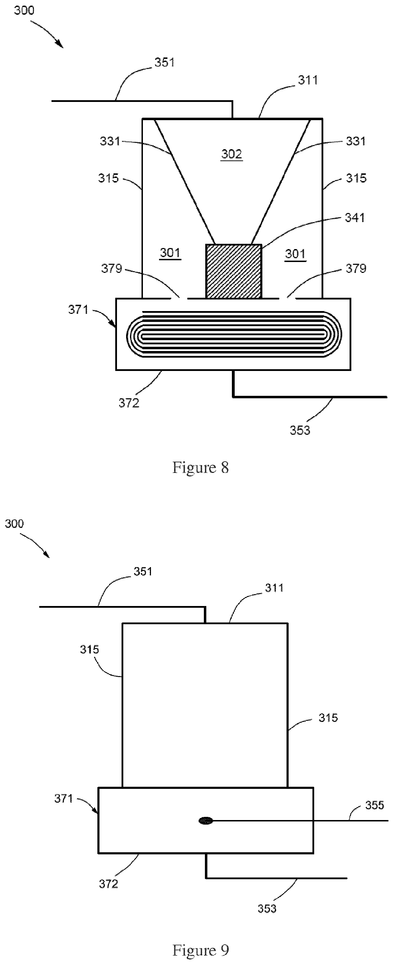

Figure 8 and Figure 9 are respectively cross-section diagram and external schematic diagram of cell connection device 300. Different from the cell connection device 200, the cell connection device 300 further comprises a conductive support 341 located inside its housing. Specifically, the cell connection device 300 comprises a conductive upper cover 311, an electrically insulated side wall 315, a metal sheet 331, the conductive support 341, a first connecting terminal 351; a second connecting terminal 353, a third connecting terminal 355, and an electrochemical unit 371. The conductive upper cover 311, the electrically insulated side wall 315, and a part of the shell 372 of the electrochemical unit 371 constitute the housing of the cell connection device 300. The conductive support 341 locates inside the housing of the cell connection device 300, and comprises an upper end and an lower end. The lower end of the conductive support 341 connects to the shell 372 of the electrochemical unit 371.

The metal sheet 331 locates inside the housing of the cell connection device 300 as an annular surface having a first opening and a second opening. The circular edge of the first opening is connected to the conductive upper cover 311, and the circular edge of the second opening is connected to the upper end of the conductive support 341, thereby separating the housing into the first space 301 and the second space 302. The first space 301 and the second space 302 are isolated physically and do not communicate with each other.

The electrochemical unit 371 is similar to the electrochemical unit 271, comprising a shell 372, a cathode, an anode, and an electrolyte solution, wherein the shell 372 of the electrochemical unit 371 is electrically connected to the anode of the electrochemical unit 371, the shell 372 has at least one through hole 379 for communicating the inner chamber of the electrochemical unit 371 and outside, for example, the first space 301 of the cell connection device 300.

The first connection terminal 351 is electrically connected to the conductive upper cover 311. The second connection terminal 353 is electrically connected to the shell 372 of the electrochemical unit 371. The third connection terminal 355 is electrically connected to the cathode of the electrochemical unit 371 through, for example, a rivet.

When the cell connection device 300 is applied in a battery through serial connection, the operation principle is same as that of the cell connection device 200.

### Example

A battery comprises 100 lithium ion cells in serial connection. Each lithium ion cell has a cathode made of lithium nickel cobalt manganate, an anode made of graphite, an electrolyte solution that is 1 mol/L lithium hexafluorophosphate solution, wherein the non-aqueous solvent comprises ethylene carbonate and methyl ethyl carbonate in a volume ratio of 3:7. The predetermined value of the sample voltage of the sample cell in the battery is 4.7V.

In the example, the cell connection device 300 shown in Figures 8 and 9 is applied in the battery described above using the connection way of cell connection device 200 shown in Figure 6. For the electrochemical unit 371 in the cell connection device 300, its cathode is aluminum foil coated with carbon material, its anode is copper coated with carbon material, its electrolyte solution is 1 mol/L lithium hexafluorophosphate solution, wherein the non-aqueous solvent comprises ethylene carbonate and methyl ethyl carbonate in a volume ratio of 3:7, and the electrolyte solution further comprises biphenyl having a weight percentage of 5 wt%. The electrochemical unit 371 has a start-up voltage of 4.7V.

In the example, the battery was charged. Based on experiments, once the sample voltage reached to 4.7V, the current of the battery was cut off. After the cell connection device 300 was disconnected with the battery, open the side wall 315 of the cell connection device 300, it is found the metal sheet 331 has a changed shape, and the connection between the metal sheet 331 and the conductive upper cover 311 was completely broken down. The explanation of principle was as follows. When the sample voltage reached 4.7V, the electrochemical unit 371 of the cell connection device 300 started to work, wherein, the cathode of the electrochemical unit 371 acted as electron donor, the ethylene carbonate, the methyl ethyl carbonate, and biphenyl in the electrolyte solution were oxidized near the cathode, and produced a large amount of carbon dioxide, methane, and ethane due to decomposition. These gases increased the pressure in the first space 301, causing a shape change of the metal sheet 331 used for separating the first space 301 and the second space 302 and a break down of the connection with the conductive upper cover 311. This was how the current in the battery was cut off.

Based on the above example, it is understood that the cell connection device of the present disclosure is in serial connection with cells in the battery. The cell connection device receives a sample voltage of a sample cell. When the sample voltage shows abnormal, i.e., above the predetermined value, the electrical connection within the cell connection device will cut off, so that the current of the battery is cut off, thereby ensure the safety of the battery. The present disclosure does not change any structure or chemical system within each cell. The cell connection device of the present disclosure is an independent device, in serial connection with cells in the battery when used. It can be one part of the battery when located inside the battery, or can be located outside the battery. The cell connection device can be replaced conveniently without disassembling the battery, therefore it is easier to maintain the battery. In addition, the cell connection device of the present disclosure has good compatibility, and can be applied in different types of batteries. For example, it is universal for battery systems having a same predetermined value of sample voltage. For batteries having different predetermined values of sample voltages, the different requirements can be met through adjusting the start-up voltage of the electrochemical unit.

## Claims

1. A cell connection device (100), configured to electrically connect a first cell and a second cell in a battery, comprising:
a housing comprising a conductive upper cover (111), a conductive lower cover (113), and an electrically insulated side wall (115);
a metal sheet (131) electrically connecting the conductive upper cover (111) and the conductive lower cover (113), and separating the housing into a first space (101) and a second space (102),
a first connecting terminal (151), electrically connecting an anode of the first cell and the conductive upper cover (111);
a second connecting terminal (153), electrically connecting a cathode of the second cell and the conductive lower cover (113); and
at least one pressure changing unit (170) disposed in the first space (101), configured to receive a sample voltage of a sample cell (10) in the battery,
wherein the pressure changing unit (170) comprises at least one electrochemical unit (171),
wherein the electrochemical unit (171) comprises a cathode (175), an anode (176), an electrolyte solution and a shell (172) having at least one opening (179),
wherein the cathode (175) and the anode (176) of the electrochemical unit (171) are respectively electrically connected to the anode and cathode of the sample cell (10),
wherein the inner chamber of the electrochemical unit (171) communicates with the first space (101);
wherein the electrochemical unit (171) is configured to start to work and produce at least one gas to increase the pressure within the first space (101) when the sample voltage is equal to or greater than a predetermined value, so as to break down the electrical connection between the metal sheet (131) and the conductive upper cover (111) or the conductive lower cover (113) and cut off the current of the battery.

2. The cell connecting device (100) according to claim 1, wherein the pressure changing unit (170) and the conductive lower cover (113) are integrated.

3. The cell connecting device (100) according to claim 1, wherein the sample cell (10) is the second cell.

4. The cell connecting device (100) according to claim 1, the at least one gas is one or more chosen from carbon dioxide, methane, ethane, hydrogen, ethylene, carbon monoxide, and acetylene.

5. The cell connecting device (100) according to claim 1, wherein the electrolyte solution comprises at least one electrolyte and at least one non-aqueous solvent, wherein the electrolyte comprises one or more chosen from lithium salts, sodium salts, and potassium salts, and wherein the non-aqueous solvent comprises one or more chosen from propylene carbonate, ethylene carbonate, vinylene carbonate, methyl ethyl carbonate ester, 1,2-dimethoxyethane, ethoxyethane, diethyl carbonate, dimethyl carbonate, tetrahydrofuran, 2-methyltetrahydrofuran, 1,3-dioxolane, 4-methyl-1,3-dioxolane, ethyl ether, sulfolane, methylsulfolane, acetonitrile, propionitrile, ethyl acetate, methyl propionate, and methyl butyrate.

6. The cell connecting device (100) according to claim 5, wherein the electrolyte solution further comprises cyclohexylbenzene or biphenyl.

7. The cell connecting device (100) according to claim 1, wherein the cathode of the electrochemical unit (171) comprises a cathode carrier, and the cathode carrier comprises one or more chosen from aluminum, titanium, platinum, gold, stainless steel, and graphite.

8. The cell connecting device (100) according to claim 7, wherein the cathode of the electrochemical unit (171) further comprises a cathode active material, and the cathode active material comprises one or more chosen from carbon, silicon, aluminum oxide, compounds containing alkali metal or alkali earth metal, ammonium nitrate, oxalic acid, maleic acid, citric acid, urea, and maleic anhydride.

9. The cell connecting device (100) according to claim 1, wherein the anode of the electrochemical unit (171) comprises an anode carrier, and the anode carrier comprises one or more chosen from copper, nickel, steel, aluminum, and graphite.

10. The cell connecting device (100) according to claim 9, wherein the anode of the electrochemical unit (171) further comprises an anode active material, and the anode active material comprises one or more chosen from carbon, silicon, lithium titanium oxide, and tin.

11. The cell connecting device (100) according to claim 1, wherein the electrochemical unit (171) further comprises a separator disposed between the cathode and the anode thereof.

12. The cell connecting device (100) according to claim 1, further comprising:
at least one arc-extinguishing unit disposed in the first space (101) or the second space (102), the arc-extinguishing unit comprises at least one arc-extinguishing material or arc-extinguishing media.

13. A battery comprising multiple cells in serial connection, and at least one cell connection device (100) according to claim 1.

14. The battery according to claim 13, wherein the battery comprises two or more of the cell connection devices (100) according to claim 1 in parallel connection.

## Patentansprüche

1. Zellenverbindungsvorrichtung (100), die dazu konfiguriert ist, eine erste Zelle und eine zweite Zelle in einer Batterie elektrisch zu verbinden, umfassend:
ein Gehäuse, das eine leitfähige obere Abdeckung (111), eine leitfähige untere Abdeckung (113) und eine elektrisch isolierte Seitenwand (115) umfasst:
ein Metallblech (131), das die leitfähige obere Abdeckung (111) und die leitfähige untere Abdeckung (113) elektrisch verbindet und das Gehäuse in einen ersten Raum (101) und einen zweiten Raum (102) trennt,
eine erste Anschlussklemme (151), die eine Anode der ersten Zelle und die leitfähige obere Abdeckung (111) elektrisch verbindet;
eine zweite Anschlussklemme (153), die eine Kathode der zweiten Zelle und die leitfähige untere Abdeckung (113) elektrisch verbindet; und
mindestens eine Druckänderungseinheit (170), die in dem ersten Raum (101) angeordnet ist und dazu konfiguriert ist, eine Testspannung einer Testzelle (10) in der Batterie zu empfangen,
wobei die Druckänderungseinheit (170) mindestens eine elektrochemische Einheit (171) umfasst,
wobei die elektrochemische Einheit (171) eine Kathode (175), eine Anode (176), eine Elektrolytlösung und eine Hülle (172) mit mindestens einer Öffnung (179) umfasst,
wobei die Kathode (175) und die Anode (176) der elektrochemischen Einheit (171) jeweils mit der Anode und der Kathode der Testzelle (10) elektrisch verbunden sind,
wobei die Innenkammer der elektrochemischen Einheit (171) mit dem ersten Raum (101) kommunizierend in Verbindung steht;
wobei die elektrochemische Einheit (171) dazu konfiguriert ist, zu arbeiten zu beginnen und mindestens ein Gas zu erzeugen, um den Druck innerhalb des ersten Raums (101) zu erhöhen, wenn die Testspannung gleich wie oder größer als ein vorbestimmter Wert ist, um die elektrische Verbindung zwischen dem Metallblech (131) und der leitfähigen oberen Abdeckung (111) oder der leitfähigen unteren Abdeckung (113) zu unterbrechen und den Strom der Batterie abzuschalten.

2. Zellenverbindungsvorrichtung (100) nach Anspruch 1, wobei die Druckänderungseinheit (170) und die leitfähige untere Abdeckung (113) integriert sind.

3. Zellenverbindungsvorrichtung (100) nach Anspruch 1, wobei die Testzelle (10) die zweite Zelle ist.

4. Zellenverbindungsvorrichtung (100) nach Anspruch 1, wobei das mindestens eine Gas eines oder mehrere ist, das aus Kohlendioxid, Methan, Ethan, Wasserstoff, Ethylen, Kohlenmonoxid und Acetylen ausgewählt ist.

5. Zellenverbindungsvorrichtung (100) nach Anspruch 1, wobei die Elektrolytlösung mindestens einen Elektrolyten und mindestens ein nichtwässriges Lösungsmittel umfasst, wobei der Elektrolyt eines oder mehrere umfasst, das aus Lithiumsalzen, Natriumsalzen und Kaliumsalzen ausgewählt ist, und wobei das nichtwässrige Lösungsmittel eines oder mehrere umfasst, das aus Propylencarbonat, Ethylencarbonat, Vinylencarbonat, Methylethylcarbonat-Ester, 1,2-Dimethoxyethan, Ethoxyethan, Diethylcarbonat, Dimethylcarbonat, Tetrahydrofuran, 2-Methyltetrahydrofuran, 1,3-Dioxolan, 4-Methyl-1,3-dioxolan, Ethylether, Sulfolan, Methylsulfolan, Acetonitril, Propionitril, Ethylacetat, Methylpropionat und Methylbutyrat ausgewählt ist.

6. Zellenverbindungsvorrichtung (100) nach Anspruch 5, wobei die Elektrolytlösung weiter Cyclohexylbenzen oder Biphenyl umfasst.

7. Zellenverbindungsvorrichtung (100) nach Anspruch 1, wobei die Kathode der elektrochemischen Einheit (171) einen Kathodenträger umfasst und der Kathodenträger eines oder mehrere umfasst, das aus Aluminium, Titan, Platin, Gold, Edelstahl und Graphit ausgewählt ist.

8. Zellenverbindungsvorrichtung (100) nach Anspruch 7, wobei die Kathode der elektrochemischen Einheit (171) weiter ein Kathodenaktivmaterial umfasst und das Kathodenaktivmaterial eines oder mehrere umfasst, das aus Kohlenstoff, Silizium, Aluminiumoxid, Alkalimetall oder Erdalkalimetall enthaltenden Verbindungen, Ammoniumnitrat, Oxalsäure, Maleinsäure, Zitronensäure, Harnstoff und Maleinsäureanhydrid ausgewählt ist.

9. Zellenverbindungsvorrichtung (100) nach Anspruch 1, wobei die Anode der elektrochemischen Einheit (171) einen Anodenträger umfasst und der Anodenträger eines oder mehrere umfasst, das aus Kupfer, Nickel, Stahl, Aluminium und Graphit ausgewählt ist.

10. Zellenverbindungsvorrichtung (100) nach Anspruch 9, wobei die Anode der elektrochemischen Einheit (171) weiter ein Anodenaktivmaterial umfasst und das Anodenaktivmaterial eines oder mehrere umfasst, das aus Kohlenstoff, Silizium, Lithiumtitanoxid und Zinn ausgewählt ist.

11. Zellenverbindungsvorrichtung (100) nach Anspruch 1, wobei die elektrochemische Einheit (171) weiter einen Separator umfasst, der zwischen der Kathode und der Anode derselben angeordnet ist.

12. Zellenverbindungsvorrichtung (100) nach Anspruch 1, weiter umfassend:
mindestens eine Lichtbogenlöscheinheit, die in dem ersten Raum (101) oder dem zweiten Raum (102) angeordnet ist, wobei die Lichtbogenlöscheinheit mindestens ein lichtbogenlöschendes Material oder lichtbogenlöschendes Medium umfasst.

13. Batterie, die mehrere Zellen in Reihenschaltung und mindestens eine Zellenverbindungsvorrichtung (100) nach Anspruch 1 umfasst.

14. Batterie nach Anspruch 13, wobei die Batterie zwei oder mehr der Zellenverbindungsvorrichtungen (100) nach Anspruch 1 in einer Parallelschaltung umfasst.

## Revendications

1. Dispositif de connexion d'éléments de batterie (100), configuré pour connecter électriquement un premier élément de batterie et un second élément de batterie dans une batterie, comprenant :
un boîtier comprenant un couvercle supérieur conducteur (111), un couvercle inférieur conducteur (113), et une paroi latérale électriquement isolée (115) ;
une feuille métallique (131) connectant électriquement le couvercle supérieur conducteur (111) et le couvercle inférieur conducteur (113), et séparant le boîtier en un premier espace (101) et un second espace (102),
une première borne de connexion (151), connectant électriquement une anode du premier élément de batterie et le couvercle supérieur conducteur (111) ;
une seconde borne de connexion (153), connectant électriquement une cathode du second élément de batterie et le couvercle inférieur conducteur (113) ; et
au moins une unité de changement de pression (170) disposée dans le premier espace (101), configurée pour recevoir une tension d'échantillon d'un échantillon d'élément de batterie (10) dans la batterie,
dans lequel l'unité de changement de pression (170) comprend au moins une unité électrochimique (171),
dans lequel l'unité électrochimique (171) comprend une cathode (175), une anode (176), une solution électrolytique et une enveloppe (172) comportant au moins une ouverture (179),
dans lequel la cathode (175) et l'anode (176) de l'unité électrochimique (171) sont respectivement électriquement connectées à l'anode et à la cathode de l'échantillon d'élément de batterie (10),
dans lequel la chambre interne de l'unité électrochimique (171) communique avec le premier espace (101) ;
dans lequel l'unité électrochimique (171) est configurée pour commencer à fonctionner et à produire au moins un gaz pour augmenter la pression à l'intérieur du premier espace (101) lorsque la tension d'échantillon est supérieure ou égale à une valeur prédéterminée, de façon à rompre la connexion électrique entre la feuille métallique (131) et le couvercle supérieur conducteur (111) ou le couvercle inférieur conducteur (113) et couper le courant de la batterie.

2. Dispositif de connexion d'éléments de batterie (100) selon la revendication 1, dans lequel l'unité de changement de pression (170) et le couvercle inférieur conducteur (113) sont intégrés.

3. Dispositif de connexion d'éléments de batterie (100) selon la revendication 1, dans lequel l'échantillon d'élément de batterie (10) est le second élément de batterie.

4. Dispositif de connexion d'éléments de batterie (100) selon la revendication 1, l'au moins un gaz est un ou plusieurs choisis parmi le dioxyde de carbone, le méthane, l'éthane, l'hydrogène, l'éthylène, le monoxyde de carbone et l'acétylène.

5. Dispositif de connexion d'éléments de batterie (100) selon la revendication 1, dans lequel la solution électrolytique comprend au moins un électrolyte et au moins un solvant non aqueux, dans lequel l'électrolyte comprend un ou plusieurs choisis parmi les sels de lithium, les sels de sodium et les sels de potassium, et dans lequel le solvant non aqueux comprend un ou plusieurs choisis parmi le carbonate de propylène, le carbonate d'éthylène, le carbonate de vinylène, un ester de carbonate de méthyléthyle, le 1,2-diméthoxyéthane, l'éthoxyéthane, le carbonate de diéthyle, le carbonate de diméthyle, le tétrahydrofurane, le 2-méthyltétrahydrofurane, le 1,3-dioxolane, le 4-méthyl-1,3-dioxolane, l'éther éthylique, le sulfolane, le méthylsulfolane, l'acétonitrile, le propionitrile, l'acétate d'éthyle, le propionate de méthyle et le butyrate de méthyle.

6. Dispositif de connexion d'éléments de batterie (100) selon la revendication 5, dans lequel la solution électrolytique comprend en outre du cyclohexylbenzène ou du biphényle.

7. Dispositif de connexion d'éléments de batterie (100) selon la revendication 1, dans lequel la cathode de l'unité électrochimique (171) comprend un support de cathode, et le support de cathode comprend un ou plusieurs choisis parmi l'aluminium, le titane, le platine, l'or, l'acier inoxydable et le graphite.

8. Dispositif de connexion d'éléments de batterie (100) selon la revendication 7, dans lequel la cathode de l'unité électrochimique (171) comprend en outre un matériau actif de cathode, et le matériau actif de cathode comprend un ou plusieurs choisis parmi le carbone, le silicium, l'oxyde d'aluminium, les composés contenant un métal alcalin ou un métal alcalino-terreux, le nitrate d'ammonium, l'acide oxalique, l'acide maléique, l'acide citrique, l'urée et l'anhydride maléique.

9. Dispositif de connexion d'éléments de batterie (100) selon la revendication 1, dans lequel l'anode de l'unité électrochimique (171) comprend un support d'anode, et le support d'anode comprend un ou plusieurs choisis parmi le cuivre, le nickel, l'acier, l'aluminium et le graphite.

10. Dispositif de connexion d'éléments de batterie (100) selon la revendication 9, dans lequel l'anode de l'unité électrochimique (171) comprend en outre un matériau actif d'anode, et le matériau actif d'anode comprend un ou plusieurs choisis parmi le carbone, le silicium, l'oxyde de lithium et de titane, et l'étain.

11. Dispositif de connexion d'éléments de batterie (100) selon la revendication 1, dans lequel l'unité électrochimique (171) comprend en outre un séparateur disposé entre la cathode et l'anode de celle-ci.

12. Dispositif de connexion d'éléments de batterie (100) selon la revendication 1, comprenant en outre :
au moins une unité d'extinction d'arc disposée dans le premier espace (101) ou le second espace (102), l'unité d'extinction d'arc comprend au moins un matériau d'extinction d'arc ou un milieu d'extinction d'arc.

13. Batterie comprenant de multiples éléments de batterie en connexion série, et au moins un dispositif de connexion d'éléments de batterie (100) selon la revendication 1.

14. Batterie selon la revendication 13, dans laquelle la batterie comprend deux des dispositifs de connexion d'éléments de batterie (100) ou plus selon la revendication 1 en connexion parallèle.
